# EUROPEAN PATENT APPLICATION

(11) **EP 2 790 308 A1**
(43) Date of publication of application: **15.10.2014**
(21) Application number: 12855279.1
(22) Date of filing: 09.08.2012
(51) Int. Cl.: H02K 21/24, H02K 1/27, H02K 16/02

(54) **ELECTROMAGNETIC GENERATOR**

(30) Priority: 05.12.2011 RU 2011149606
(71) Applicant: Esakov, Sergej Mikhailovich, St.Petersburg 198510 (RU); Esakov, Mikhail Sergeevich, St.Petersburg 191144 (RU)
(72) Inventor: ESAKOV, Sergej Mikhailovich, St.Petersburg, 198510 (RU); ESAKOV, Mikhail Sergeevich, St Petersburg, 191144 (RU); VELIKO-IVANENKO, Anatolij Yurievich, St Petersburg, 198328 (RU)
(74) Representative: Gulde & Partner
(86) International application number: PCT/RU2012/000656
(87) International publication number: WO 2013/085418

(57) **Abstract**

The invention relates to the field of electrical engineering, specifically to low-speed electrical generators, and can be used in particular in wind energy installations. In the proposed electromagnetic generator the rotor is equipped with permanent magnets (3, 4) and the stator comprises two parallel plates (5, 6), between which annular windings (7) are arranged. The rotor is formed from two parallel discs (1, 2) fixed to a shaft (10), with circular rows of said permanent magnets arranged on each of said parallel discs on surfaces facing one another, the polarity of said permanent magnets in each row alternating, while the poles of the permanent magnets in one row are turned towards the opposite poles of the permanent magnets in the other row. The annular windings (7) of the stator are inserted in pairs one inside the other and are in the form of isosceles trapeziums, the lateral sides (8, 9) of which are arranged radially relative to the axis (10) of rotation of the rotor. Sections (11, 12) of the annular windings (7) in the bases of the trapeziums arch out convexly, wherein the distance *l* between the sections of annular windings in the bases of the trapeziums exceeds the width *b* of the circular row of permanent magnets (3, 4), which adjoin one another in each circular row. The permanent magnets adjoin one another in each circular row by the adjacent lateral planes thereof. The technical result consists in increasing the power of an electromagnetic generator whilst maintaining the overall dimensions thereof.

## Description

### Technical field

The invention relates to the field of electrical engineering, specifically to low-speed electrical generators, and can be used in particular in wind energy installations.

### Background art

A low-speed electromagnetic generator is known from the prior art, which comprises a circular row of stator windings on iron cores made of iron sheets or compressed iron powder and a matching circular row of permanent rotor magnets, in particular a synchronous machine with permanent magnetization for sinusoidal voltage, wherein the windings are concentrated instead of being distributed in the slots, the cores with windings are alternated with iron cores without windings so that every second iron core has a winding, the number of gaps between cores is different from the number of poles, wherein the number *s* of gaps between the cores and the number *p* of poles correspond to the formulas |s-p| = 2•m and s = 12•n•m, where *n* and *m* are positive integers, wherein the machine is designed for three-phase voltage with series connection of adjacent coils in order to obtain *m* such groups per phase that can be connected either in series or in parallel, see RU2234788 C2.

The disadvantage of said generator consists in its low efficiency (low energy conversion efficiency), because the windings in the circular row are positioned at a great distance from each other and no electromotive force (EMF) is induced therein when the magnets are located in the gap between the windings.

Another known electromagnetic generator includes a rotor equipped with permanent magnets and a stator that comprises two parallel plates in the form of interconnected disks with windings arranged therebetween; the stator has magnetic cores in the form of flat rings, see RU 2168062 C1.

This technical solution has the same disadvantage as the abovementioned analogous solution (see RU 2234788 C2), namely its low energy conversion efficiency, which has the same cause. In addition, when the permanent magnets of the rotor pass over the cores of stator windings, the permanent magnets and the cores of stator windings become attracted to each other (the so-called rotor sticking effect), which hinders the start of the generator and produces intense noise during its operation.

Increased energy conversion efficiency of the generator, decreased starting torque and reduced noise level during operation are achieved in an electromagnetic generator that includes a rotor equipped with permanent magnets and a stator comprising two parallel plates, between which annular windings are arranged; the rotor is formed from two parallel discs fixed to a shaft, with circular rows of said permanent magnets arranged on each of said parallel discs on surfaces facing one another, said permanent magnets being arranged equidistantly in each row, and the polarity of said permanent magnets in each row alternating, while the poles of the permanent magnets in one row are turned towards the opposite poles of the permanent magnets in the other row; the annular windings of the stator are inserted in pairs one inside the other and are in the form of isosceles trapeziums, the lateral sides of which are arranged radially relative to the axis of rotation of the rotor; the sections of the annular windings in the bases of the trapeziums arch out convexly, wherein the distance *l* between the sections of annular windings in the bases of the trapeziums exceeds the width *b* of the circular row of permanent magnets, see RU 2427067 C1.

This device has been taken as a prototype of the present invention.

In this electromagnetic generator the permanent magnets in each circular row are arranged equidistantly relative to each other. The gaps between permanent magnets in each row correspond to the magnet dimensions. When the rotor rotates, said empty gaps do not induce electromotive force (EMF) in the stator windings, which reduces the power of the electric generator.

### Summary of the invention

It is an object of the present invention to increase the power of an electromagnetic generator whilst maintaining the overall dimensions thereof.

According to the invention, in the proposed electromagnetic generator the rotor is equipped with permanent magnets and the stator comprises two parallel plates, between which annular windings are arranged. The rotor is formed from two parallel discs fixed to a shaft, with circular rows of said permanent magnets arranged on each of said parallel discs on surfaces facing one another, the polarity of said permanent magnets in each row alternating, while the poles of the permanent magnets in one row are turned towards the opposite poles of the permanent magnets in the other row. The annular windings of the stator are inserted in pairs one inside the other and are in the form of isosceles trapeziums, the lateral sides of which are arranged radially relative to the axis of rotation of the rotor. The sections of the annular windings in the bases of the trapeziums arch out convexly, wherein the distance *l* between the sections of annular windings in the bases of the trapeziums exceeds the width *b* of the circular row of permanent magnets, which adjoin one another in each circular row. The permanent magnets adjoin one another in each circular row by the adjacent lateral planes thereof.

The applicant has not found any sources of information containing data on technical solutions identical to the present invention, which enables to conclude that the invention conforms to the criterion "Novelty" (N).

The applicant has not found any sources of information containing data on the influence of the features of the invention on the technical result produced by the invention. In applicant's opinion, the abovementioned new property enables to conclude that the invention conforms to the criterion "Inventive Step" (IS).

### Brief description of the drawings

The invention is further explained, by way of example, with reference to the following drawings, in which:
Figure 1 - a side view of an embodiment according to claim 1 of the invention;
Figure 2 - A-A section of Figure 1;
Figure 3 - a side view of an embodiment according to claim 2 of the invention;
Figure 4 - B-B section of Figure 3;
Figure 5 - adjacent annular windings coupled with each other, shown in an axonometric projection;
Figure 6 - adjacent annular windings, shown in plan view;
Figure 7 - C-C section of Figure 6.

### Preferred embodiment

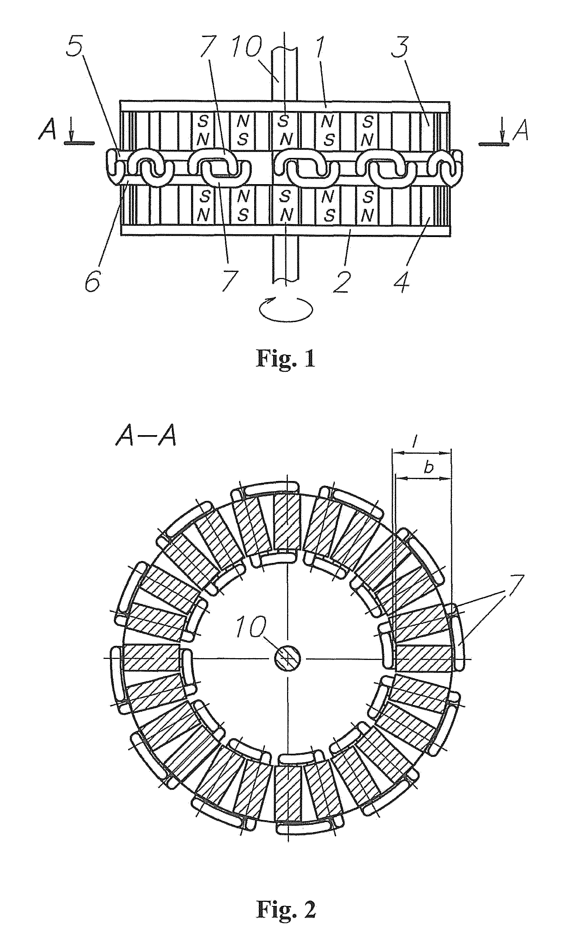

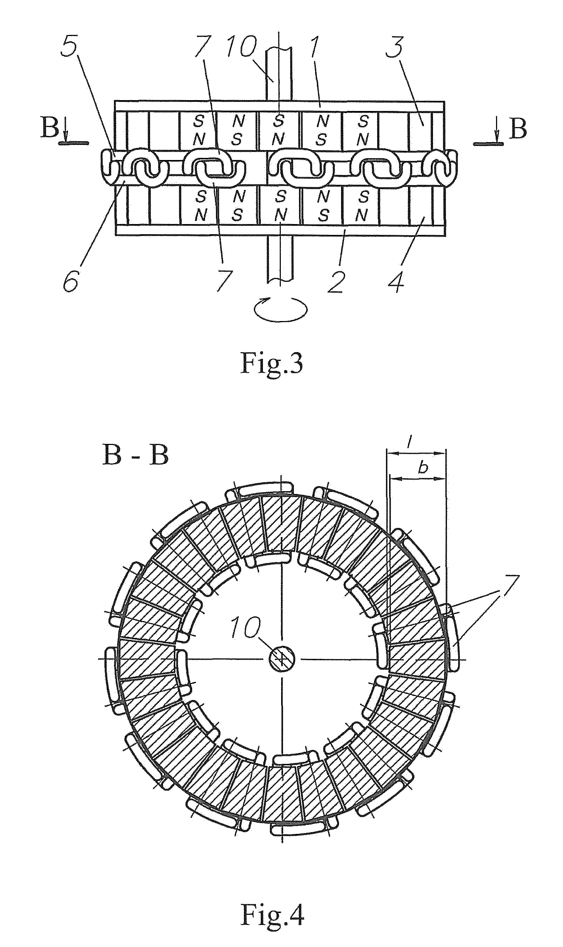

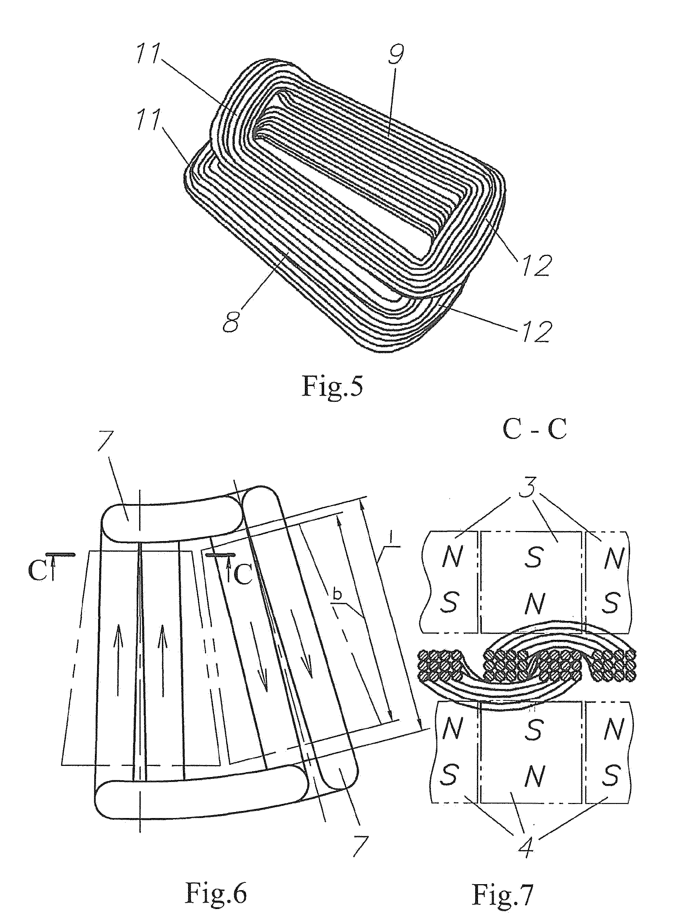

The rotor of the electromagnetic generator is formed from two parallel disks (1, 2) fixed to a shaft (10). In this particular embodiment the disks (1, 2) are made of electrical steel. Circular rows of permanent magnets (3, 4) are arranged on said parallel disks (1, 2) on surfaces facing one another. The magnets (3, 4) adjoin one another in each circular row. In the embodiment shown in Figures 1 and 2 the permanent magnets (3, 4) are in the form of rectangles and adjoin one another by the angles thereof. In the embodiment shown in Figures 3 and 4 the permanent magnets (3, 4) are in the form of trapeziums and adjoin one another by the adjacent lateral planes thereof. In the embodiment shown in Figures 1 and 2 relatively small triangular gaps are left between the permanent magnets (3, 4), and in the embodiment shown in Figures 3 and 4 there are quite small gaps (0.1-0.2 mm) between the magnets (3, 4) that are filled with epoxide compound. The polarity of the permanent magnets (3, 4) alternates in each row, while the poles of the permanent magnets (3, 4) in one row are turned towards the opposite poles of the permanent magnets (3, 4) in the other row. The stator of the electromagnetic generator comprises two parallel plates (5, 6), between which annular windings (7) in the form of isosceles trapeziums are arranged. The lateral sides (8, 9) of said trapeziums are arranged radially relative to the longitudinal axis (10) of rotation of the rotor, and the sections (11, 12) of the windings (7) in the bases of the trapeziums arch out convexly (see Figure 5). The windings (7) are coupled with one another in pairs: said windings are inserted one inside the other (see Figures 5 and 6), wherein the distance *l* between the sections (11, 12) of the windings (7) exceeds the width *b* of the circular row of permanent magnets (3, 4) (see Figures 4 and 6). The upper-located windings (7) are fixed to the plate (5) and the lower windings (7) are fixed to the plate (6).

The electromagnetic generator functions in the following way. When the rotor and the shaft (10) rotate, the magnetic field lines of the permanent magnets (3, 4) cross the turns of the annular windings (7) and induce EMF in said windings (7). Since the lateral sides (8, 9) of the annular windings (7) are positioned between the poles of magnets (3, 4) with different polarity, differently directed EMF is induced in the lateral sides (8, 9) of the windings (7) (shown with arrows in Figure 6). Therefore, ring electric current flows in each winding (7). The windings (7) that are fixed to the plate (5) are connected to each other, and the windings (7) that are fixed to the plate (6) are similarly connected to each other.

Since the conductors of the windings (7) uniformly fill the circular gap between the moving magnets (3, 4) (see Figure 5), creating a uniform medium for the moving magnets (3, 4), the described construction has no rotor sticking problems, which ultimately ensures quiet and smooth operation of the generator.

The implementation of the features of the invention, namely the fact that the permanent magnets in each circular row adjoin one another, provides an important technical result: more uniform EMF induction in the windings and, therefore, increased power of the generator.

Table 1 contains the values of power of an experimental model of the electromagnetic generator shown in relation to the number of rotor rotations (rotor speed), versus the prototype.

### Industrial applicability

The inventive device can be manufactured by means of common constructional materials and factory equipment. In applicant's opinion, this enables to conclude that the invention conforms to the criterion "Industrial Applicability" (IA).

The values of power of an experimental model of the electromagnetic generator shown in relation to the number of rotor rotations (rotor speed), versus the prototype.

**Table 1**

| Number of rotations per minute | Power, W | | |
|---|---|---|---|
| | Embodiment according to claim 1 of the invention | Embodiment according to claim 2 of the invention | Prototype |
| 120 | 108 | 109 | 48 |
| 275 | 238 | 241 | 116 |
| 550 | 480 | 483 | 218 |

## Claims

1. An electromagnetic generator, in which the rotor is equipped with permanent magnets and the stator comprises two parallel plates, between which annular windings are arranged; the rotor is formed from two parallel discs fixed to a shaft, with circular rows of said permanent magnets arranged on each of said parallel discs on surfaces facing one another, the polarity of said permanent magnets in each row alternating, while the poles of the permanent magnets in one row are turned towards the opposite poles of the permanent magnets in the other row; the annular windings of the stator are inserted in pairs one inside the other and are in the form of isosceles trapeziums, the lateral sides of which are arranged radially relative to the axis of rotation of the rotor; the sections of the annular windings in the bases of the trapeziums arch out convexly, wherein the distance *l* between the sections of annular windings in the bases of the trapeziums exceeds the width *b* of the circular row of permanent magnets, **characterized in that** the permanent magnets in each circular row adjoin one another.

2. An electromagnetic generator according to claim 1, **characterized in that** the permanent magnets in each circular row adjoin one another by the adjacent lateral planes thereof.
